(19) Europäisches Patentamt
European Patent Office
Office européen des brevets

(11) EP 0 569 314 B1

(12) **EUROPEAN PATENT SPECIFICATION**

(45) Date of publication and mention
of the grant of the patent:
**07.05.1997 Bulletin 1997/19**

(51) Int Cl.⁶: **H04Q 7/22**, H04B 7/24

(21) Application number: **93500003.4**

(22) Date of filing: **21.01.1993**

(54) **Equipment for coupling one or several conventional telephone sets to a cellular radio network**

Anschlusseinheit zum Verbinden eines oder mehrerer konventioneller Telefonapparate an ein zellulares Funknetz

Equipement pour coupler un ou plusieurs appareils téléphoniques conventionnels à un réseau cellulaire

(84) Designated Contracting States:
**AT BE CH DE DK FR GB GR IE IT LI LU MC NL PT SE**

(30) Priority: **07.05.1992 ES 9200957**

(43) Date of publication of application:
**10.11.1993 Bulletin 1993/45**

(73) Proprietor: **AMPER DATOS, S.A.**
**28760 Tres Cantos (Madrid) (ES)**

(72) Inventor: **Romeo Zabaleta, Juan**
**E-28006 Madrid (ES)**

(74) Representative: **Carpintero Lopez, Francisco**
**HERRERO & ASOCIADOS, S.L.**
**Alcalá, 21**
**28014 Madrid (ES)**

(56) References cited:
**US-A- 4 658 096**          **US-A- 4 718 080**

- **GLOBECOM '89 IEEE GLOBAL TELECOMMUNICATIONS CONFERENCE & EXHIBITION vol. 2, November 1989, DALLAS US pages 1055 - 1059 R.J.MCGUIRE'Exchange Radio Technology'**
- **COMMUTATION & TRANSMISSION vol. 3, no. 3, September 1981, ISSY-LES-MOULINEAUX FR pages 39 - 54 H.BADOUAL ET AL. 'Système de Téléphonie Rurale IRT 1500'**
- **PROCEEDINGS PACIFIC TELECOMMUNICSTIONS: WEAVING THE TECHNOLOGICAL AND SOCIAL FABRIC January 1990, HONOLULU, HI,US pages 258 - 260 W.I.THOMAS 'Rural Radio Telephone'**
- **NACHRICHTENTECHNIK ELEKTRONIK vol. 42, no. 4, July 1992, BERLIN DE pages 130 - 135 G.MANDEL ET AL. 'DAL in analog-zellularer Technik'**

## Description

The present invention relates to electronic equipment designed to act as a bridge element between a cellular radio network and one or several conventional sets, in order that outgoing calls can be made and incoming calls received with such conventional electronic sets using the said cellular radio network.

The equipment subject hereof therefore essentially works with the public telephone network as a cellular mobile radio-telephony service terminal and works with the subscriber or user as if it were a "physical" telephone line, such that any terminal, namely telephone sets, public telephones, telefax machines, computers and so forth may be connected to the equipment in functional and electrical conditions similar to those of a true telephone line from the local exchange.

In accordance with the above the equipment subject hereof is particularly useful for rural telephone systems, mobile public telephones, call-boxes and semi-fixed telephones, emergency telephones, communications systems back-up telephone lines, telephone line alarm systems and so forth.

## BACKGROUND OF THE INVENTION

Although the basic concept of a cellular radio originated at the Bell laboratories in 1947, the first system was not put into effect until 1980 primarily for technological reasons. The main advantage of a cellular system over other mobile radio systems is its capacity to handle greater traffic loads because of the efficient reuse of the radio frequencies available.

The area to cover is divided into a number of small areas (cells). Each cell is equipped with its own base radio station. The cells are grouped into "clusters" and the number of radio channels available is distributed into the group of cells such that this distribution is repeated throughout the area covered. This technique allows reuse of the radio channels.

The number of cells in a "cluster" must be determined so as to be repeated uninterruptedly in the area covered. Only some configurations so allow. Typical clusters are based on 4, 7, 12 or 21 cells.

The number of cells in each cluster is significantly important in the overall system capacity. The smaller the number of cells, the larger the number of channels per cell and hence the more traffic there is. A point of equilibrium must however be sought. If more channels are used per cell and the size of the cluster is smaller (less cells) the distance between the cells used by the same channels is smaller and hence interference between adjacent clusters increases (co-channel interference).

The total number of channels per cell (and hence the traffic) depends on the number of channels available and the type of cluster, to wit:

$$\text{Number of channels per cell :} = \frac{\text{Total number of channels}}{\text{Cluster (4, 7, 12, 21)}}$$

The traffic in a particular area can however be increased (watching for interference problems) if cell size is reduced, so as to increase the overall number of radio channels available in the area.

The base stations located in the centre of each cell are linked to an exchange which is essentially a telephone exchange modified for the cellular system. A cellular network will in practice comprise several interconnected exchanges. This configuration allows the various types of calls, namely mobile to fixed, fixed to mobile and mobile to mobile calls, to be fully made.

The cellular system includes two important services when it comes to allowing mobile communications to be held. The first one is the so-called "register" which is the system's ability to know where the mobile is at all times within the area covered.

The second feature is the system's capacity to change cells without losing the call.

A number of radio channels are reserved within the system as signalling channels. The network is moreover divided into a number of traffic areas, each area comprising a group of cells. The base station generates an identification code for the traffic area to which it belongs, as part of the information transmitted by the signalling channels.

A mobile subscriber travelling along the network monitors the signalling channel transmitting most strongly. When the mobile moves from one cell to the next an impairment is detected in the quality of reception in the common signalling channel used and hence another channel with a more powerful signal is sought.

When the mobile has tuned into the new signal, two options are available. The first is not to leave the traffic area after hand-off. In this case, no initiative is taken as regards registering.

The second option is for the mobile to change not only the cell but the area. In this case the mobile will transmit its identification to the new base station, which will transfer the information to the exchange. The mobile will have therefore registered its location in order for the network to be rapidly and efficiently able to direct the call to the mobile.

The second characteristic of the cellular system is the so-called "in-call hand-off". As the mobile moves within the area covered it can cross the border between cells while the call is under way. Inasmuch as the conversation is not interrupted until hand-off, the base station will supervise the signal received from the mobile and will detect any impairment to the signal at the cell borders. The base station will then inform the mobile that cell change (hand-off) is required. The exchange will order the base stations in adjacent cells to supervise the mobile call and will choose the best cell to which to transfer the call. A free conversation channel will be searched for in the new cell and the mobile, still in the original cell, will be instructed to select the new channel. The final part of cell switching typically lasts under one second and the user barely perceives that anything is amiss.

This minor voice interruption does not affect the conversation as it does data transmission. Hence, the two data transmission sets must be fitted with error detection and correction protocols to ensure that the information is complete.

Of the various cellular telephony systems, most notable are the AMPS, the TACS and the NMT, the TACS being a derivative of the AMPS.

The constructive and operational features of telephones utilizable in the cellular systems notably differ from terminal sets connectable to the telephone network, thereby preventing direct shifting of these kinds of sets to provide a basic telephone service in conditions equivalent for the user to physical telephone lines.

To understand this better, we must know a little more about cellular radio-telephony, the basic components and the operation thereof.

Several kinds of cellular telephones exist, including car, portable and pocket telephones. They all have three essential components:

- A handset.
- A radio transceiver.
- An aerial.

The handset contains all user interaction elements: acoustic transducers, dialling and functions keyboard (dialling repeat, send, clear, memory, end, ...) and display. In fact, the handset also contains the control unit for the radio-telephone as a whole and commands the rest of the equipment.

The transceiver comprises a radio transmitter and receiver using a frequency synthesizer to tune into any radio channel in the cellular system. The logical unit in the transceiver interprets the commands sent by the handset and manages the radio circuits. It also communicates with the base stations to establish the connections, determine the suitable frequencies and coordinate hand-off. In car facilities the transceiver comprises a box fitted outside the passenger cabin. The transceiver has interfaces for connection to the handset. In car facilities the radio-telephones are powered by the car battery (12 volts).

The aerial is a critical element and the type and location thereof determine the quality of transmission and reception. The different kinds cover roof, magnetic, glass top, high gain, flexible and phase coil aerials.

Roof aerials generally provide a better quality of transmission and reception in car facilities because the car roof serves as earth plan.

Magnetic aerials are advantageous in that no bores need be used in fitting the same. The base of the aerials has a permanent magnet affixing the same to the metal surface of the vehicle.

Phase coil aerials, also called "pigtail" aerials, increase the aerial efficiency by around 50%. "Yagui" type directional aerials can be used in fixed installations to notably increase the quality of transmission and reception, and allow terminals to be located outside the nominal radius of the cells for mobiles.

The cellular telephone handset contains several function keys and light-emitting diodes that are not contained in usual telephones. Such keys are the following:

- Send.
- End.
- Clear.
- Function.
- Lock.

The "send" key activates the dialling process after the user has keyed in the telephone number using the dialling keyboard. The "end" key ends the call under way. The "clear" key eliminates the last unfinished operation. The "function" key selects the services to which access can be gained through the number board. The "lock" key functions as a safety mechanism to prevent unauthorized access. The user must key in an access code.

Cellular telephones are not used in the same way as conventional telephones. Firstly, users calling via the cellular network will not hear the dial request tone when they pick up (unhook) the handset. Connection will not be established until the telephone number is keyed in and the "send" key pressed. The only audible signal the user will perceive is the ringing or engaged tone once connection is made. Having reached this point, there are no more differences between a cellular and a conventional telephone call. To end the call, the cellular user must use the "end" key.

Cellular telephones have no meter pulses; call cost information is a service that the equipment can include, electronically registered in their control unit.

US Patent 4 718 080, relates to an interface card being controlled by a microprocessor for a mobile cellular system,

US Patent 4 658 096, relates to a system for interfacing a standard telephone set with a radio transceiver. This interface system converts tone-dial or pulse-dial inputs from the telephone into a serial data stream for storage in the transceiver. This system makes a simulation of the typical signals of the standard telephones. This system foresees the coupling of conventional telephones to the radio transceiver through a new interface system, which simulates ring and dial-tone type signals.

## DESCRIPTION OF THE INVENTION

The unit subject of the invention allows as aforesaid one or several conventional telephone sets to be coupled to a cellular radio network, which coupling was heretofore impossible, thereby voiding the functional and service limitations of cellular telephone sets, which will no longer be incompatible with conventional telephone sets, allowing the infrastructures of cellular networks (transmission and switching means) to be used for basic telephone service extension applications in rural and outer areas where the establishment of physical lines would be very costly.

Broadly speaking, the unit allows a conventional line to be established immediately wherever the radio-electric cover of the cellular networks is available.

More specifically and in order to achieve the above the said unit comprises a transceiving unit, an electronic unit interfacing the handset and the cellular telephone system, which handset will not normally be used with the transceiving unit, but only in service operations by the company, to which end the set will be provided with the relevant jack box, the said transceiving unit having in turn a vocal interface connected to it that is capable of handshaking with the said unit using its same protocol, in order to provide a telephone line having the same loop current characteristics, dial request tone, call current and so forth, as a normal telephone line.

The set is moreover fitted with a rating interface, such comprising an electronic card capable of receiving the telephone line provided by the vocal interface, receiving the logical signals provided by the said vocal interface and subsequently processing the same to start generating the rates, generating the required meter pulses to charge in public telephones, generating the actual required power supply in the card and incorporating the battery charge circuit, switching and supervising the same in the absence of an outside power supply.

The equipment is completed by the power source and a battery, the power source comprising an electronic card supplying the necessary power for each of the set components to work at the mains voltage, while the battery is designed to render the set self-sufficient in the event of potential power cuts.

The equipment is naturally also equipped with an aerial for connection to the cellular radio network, such being either internal or external and in any event connected to the transceiving unit.

## DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- is a diagram showing a conventional cellular radio system structure.

Figure 2.- Is a block diagram of the equipment subject of the present invention and allowing one or several conventional telephones to be coupled to a cellular radio system such as in figure 1.

Figure 3.- is a diagrammatic front elevation view of the establishment of the coupling set subject of the invention within the relevant box or frame, shown open.

Figure 4.- is a front view of the above assembly, but wholly closed.

Figure 5.- Is finally a practical embodiment of the coupling equipment to extend the subscriber cellular line telephone service.

**EP 0 569 314 B1**

## PREFERRED EMBODIMENT OF THE INVENTION

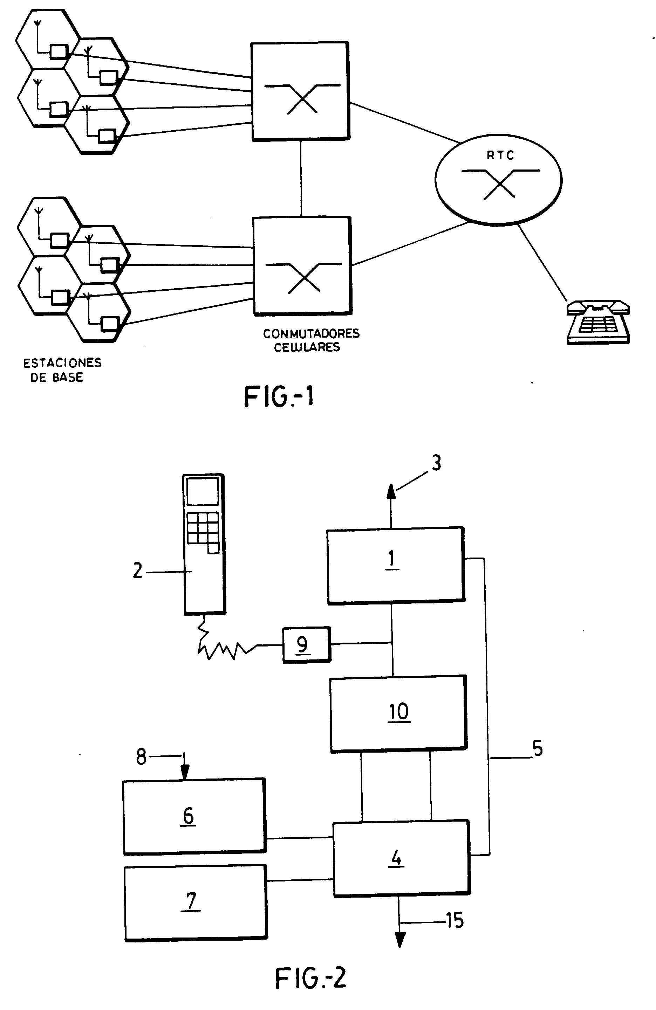

In the figures and in particular figure 2 it can be seen that the coupling equipment subject hereof is structured with a transceiving unit (1) comprising an electronic unit that interfaces the handset (2) and the cellular telephone system. This transceiving unit (1) has a lead connector, a TNC female connector for connection of the external aerial (3) and a sub-D connector for connection thereof to the said handset (2), preferably powered at a direct current of 13 volts through the rating interface (4), described hereinbelow, through the feeder line (5), such voltage being supplied by a power source (6) that is fitted with a battery (7) taking over in the event of a mains power cut (8) to distribute electric power.

The said handset (2) is not a true stable component of the equipment, but will only be used in service operations by the company, to which end the equipment is provided with a jack box (9) with a line linking the said sub-D connector to the transceiving unit (1), the jack box (9) not being accessible for the subscriber.

The equipment is further provided with a vocal interface (10) comprising an electronic card connected to the transceiving unit (1) and can handshake therewith using its same protocol in order to provide a telephone line with the same loop current, dial request tone, call current and other characteristics of a normal telephone line.

This unit is powered at a direct current of 13 volts through the transceiving unit (1) and also provides for the power source (6) or otherwise the battery (7).

The vocal interface (10) has a female BELL connector for connection thereof to the rating interface (4), a sub-D connector for connection by means of a suitable line to the transceiving unit (1), a power-on switch, a jack for connecting logical signals with the rating interface (4) and LEDs.

The rating interface (4) also comprises an electronic card that is capable of the following functions:

- Reception of the telephone line provided by the vocal interface (10).

- Reception of the logical signals provided by the vocal interface (10) and subsequent processing to begin rating generation.

- Generation of the required 12 KHz meter pulses to charge in public telephones.

- Generation of a direct current of 5 volts required for the actual card.

- Incorporation of the battery charge circuit (7), switching and supervising the same in the absence of external power (8).

The power source (6) also comprises an electronic card providing the required power for the equipment to operate. A direct current of 15 volts is actually provided from the 220 volts in mains supply alternating current (8) or as appropriate 110 to the rating interface (4) from where the rest of the equipment is powered.

The battery (7), sealed and designed to render the equipment self-sufficient, is charged by a circuit located at the rating interface (4).

A terminal strip located in an electronic card interconnects the power source (6) with the rating interface (4) and also has strips for internal equipment connections and connections to the outside.

The equipment can be fitted with an ominidirectional 0 db internal aerial (3) coupled to the equipment box or otherwise with an external aerial. The aerial (3) will in any event be connected to the transceiving unit (1) through a male TNC connector.

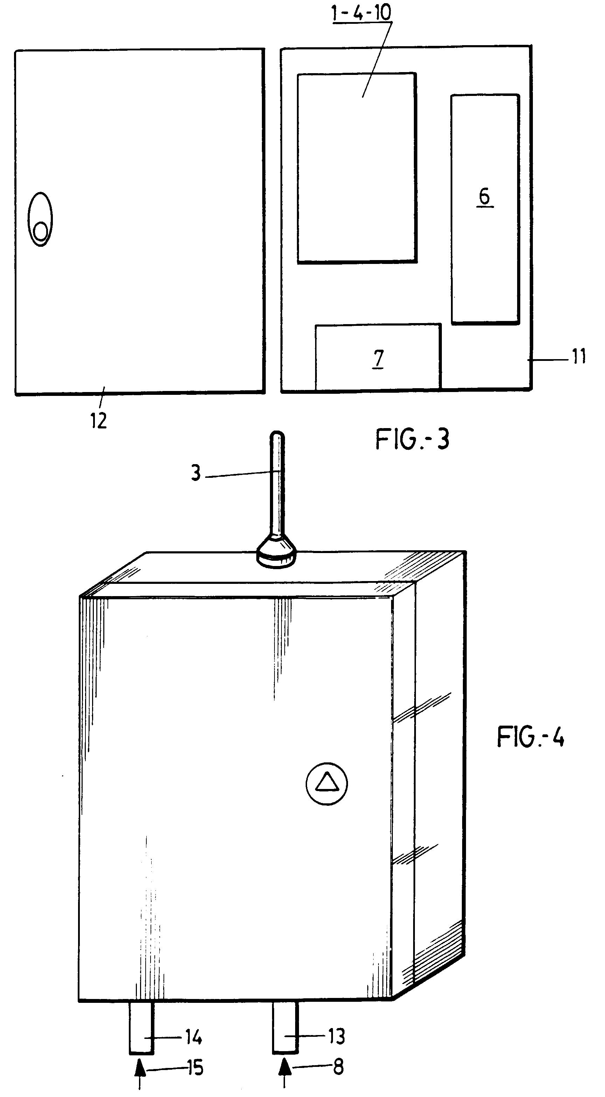

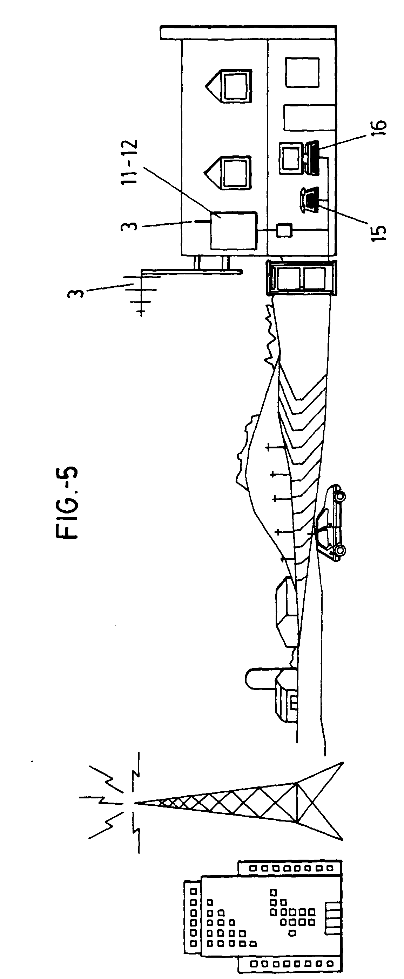

The equipment structured thus and as shown in figure 3 will be housed inside a box or frame (11) with the respective hermetically sealed door (12) from which the aerial (3) will project hermetically, fitted inside with a power (8) inlet (13) and another inlet (14) for connection of the telephone (15) or any other type of set connectable to a telephone line, such as for instance a computer (16), a fax machine and so forth. In particular, figure 5 shows a practical embodiment of the coupling equipment, to extend a subscriber cellular line telephone service, which figure shows a given practical embodiment of the installation of the receiving aerial (3) and some of the possible sets connectable to the said subscriber line.

In the specific case of a telephone (15) and to make an outgoing call, a user will pick up the handset from its terminal and the system, on detecting loop closure, will provide a dial request (continuous 400 Hz) tone. If the cellular network cannot be linked with (no service), the engaged tone will be given.

On hearing the request tone, the user will proceed to dial the destination telephone number. On dialling the first number, the dial request tone will no longer be heard.

Dial over will be decided by the equipment when a certain time elapses without any new figures being dialled. Thus, with no user involvement, the habit of dialling as in conventional telephones is maintained.

After dialling, the user will await until the call is completed (ringing signal and pick-up by the subscriber being called). When the conversation is over, the call will end on putting down the receiver.

With incoming calls, on receiving an incoming call the equipment will generate the ringing signal (nominal 60 vef., 20 Hz) causing the acoustic perception of the telephone bell linked to the line.

Connection through the cellular network will be completed by picking up the telephone. When the conversation is over the call will be ended by putting down the receiver.

In the case of data communications, the system allows the cellular network to transmit data similarly to a telephone line. However, radio linkage is subject to fading disturbances and momentary losses through hand-off in the case of mobiles. The network sector to the subscriber will also be affected by information loss situations inherent in the switched telephone network (noise and hash).

The above all demands that data transmission procedures protect the wholeness of the information. Broadly speaking, the protocols used by equipment with modems serve this purpose.

As regards rating the calls, the equipment can generate meter pulses at the telephone line interface towards the terminals connected thereto. This service is particularly useful when a public telephone service is provided.

The procedure used by the equipment comprises retransmitting the rating information to the telephone interface from the data provided by the network. The latter will to this end need to include the said information in the signalling to the cellular terminal.

In the ETACS system, the rating information of a particular call is included in a sequence of 10 bits within base signalling to the cellular terminal.

The said word contains the interval between pulses (meter stages) expressed in tenths of a second. The cellular transceiver has access to such information and can use the same to accumulate meter unit counters.

The equipment uses the network rating information processed by the transceiver to reconstitute the meter pulse system and modulate a 12 KHz signal, superposed to the direct and alternating voltages of the loop at the telephone interface, so that the terminal equipment provided with a 12 KHz meter impulse receiver can use this procedure to rate the calls.

## Claims

1. Fixed equipment for coupling one or several conventional telephone sets to a cellular radio telephone network, the equipment being arranged for connection to any standard analogue telephone equipment with an interface to a standard two-wire telephone line, said equipment comprising a transceiving unit (1) comprising an electronic unit adapted to interface the cellular radio telephone system through an aerial (3), which transceiving unit has a vocal interface (10) connected to it comprising an electronic card able to handshake with the transceiving unit (1) using a protocol compatible with the transceiving unit, in order to provide a telephone line with the same loop current, dial request tones, call current and other characteristics as a normal telephone line, said equipment further comprising power generating means incorporating a battery (7) and a charge circuit to supplement a power source (6) that is connected to the mains (8) and is able to generate direct current at the required voltage to power the various elements making up the equipment, characterized in that the transceiver unit (1) is adapted to interface a handset (2) and in that said equipment is provided with a rating interface (4) comprising an electronic card functioning to receive signals on the telephone line provided by the vocal interface (10), including logical rating signals received from the cellular radio telephone network, and subsequently to process said logical signals to generate the rating pulses required for charging in public telephones, the said rating interface (4) being connected to the various telephone or other sets (15).

2. Equipment for coupling one or several conventional telephone sets to a cellular radio network, as in claim 1, characterized in that the transceiving unit (1) is provided with a jack box (9), inaccessible for the user, through which the handset (2) is connected to the said unit in service tests by the company.

3. Equipment for coupling one or several conventional telephone sets to a cellular radio network, as in the above claims, characterized in that the aerial (3) can be internal, omnidirectional coupled to the equipment box or frame (11) or external to the same, duly connected in any event to the transceiving unit (1).

## Patentansprüche

1. Feststehende Anschlußeinheit zum Verbinden eines oder mehrerer konventioneller Telefonapparate an ein zellulares Funknetz, die dazu vorbereitet ist, an irgendeine analogische Standard-Telefon-Anlage angeschlossen zu werden, mit einer Schnittstelle zu einer gewöhnlichen zwei-Draht Telefonlinie, wobei diese Einheit einen Sender-Empfänger (1) enthält, mit einer elektronischen Einheit die dazu geeignet ist, mit dem zellularen Funksystem mittels einer Antenne (3) Verbindung aufzunehmen, indem an den Sender-Empfänger eine Sprach-Schnittstelle (10) angeschlossen ist mit einer elektronischen Leiterplatte die mit dem Sender-Empfänger (1) Verbindung aufnehmen und einen Anschluß herstellen kann, wozu ein mit dem Sender-Empfänger verträgliches Protokoll verwendet wird, um eine Telefonlinie mit dem selben Schleifenstrom, dem selben Wählanforderungston, Anrufstrom und restlichen Eigenschaften wie die einer normalen Telefonlinie zu bieten, wobei diese Einheit ebenfalls Mittel zur Stromversorgung enthält mit einer Batterie (7) und einem Ladekreis, zur Ergänzung der Stromversorgung (6) die an das Netz (8) angeschlossen ist, und die einen Gleichstrom mit der gewünschten Spannung erzeugen kann um die verschiedenen Baugruppen der Einheit zu versorgen,

dadurch gekennzeichnet

daß der Sender-Empfänger (1) vorbereitet ist um mit einem Handapparat (2) verbunden zu werden und daß diese Einheit eine Abrechnungs-Schnittstelle (4) enthält mit einer elektronischen Leiterplatte welche über die Telefonlinie und die Sprach-Schnittstelle (10) Signale empfangen kann, einschließlich logische Abrechnungs-Signale die über das zellulare Funknetz empfangen werden, um diese logischen Signale anschließend aufzubereiten um die erforderlichen Abrechnungs-Impulse zu erzeugen für die Bezahlung an öffentlichen Sprechstellen, wozu diese Abrechnungs-Schnittstelle (4) an die verschiedenen Telefone oder andere Geräte (15) angeschlossen ist.

2. Anschlußeinheit zum Verbinden eines oder mehrerer konventioneller Telefonapparate an ein zellulares Funknetz, laut Patentanspruch 1, dadurch gekennzeichnet, daß der Sender-Empfänger (1) mit einem für den Benutzer unzugänglichen Anschlußkasten (9) bestückt ist, in welchem der Handapparat (2) für die Betriebsproben der Telefongesellschaft angeschlossen wird.

3. Anschlußeinheit zum Verbinden eines oder mehrerer konventioneller Telefonapparate an ein zellulares Funknetz, laut obenstehenden Patentansprüchen, dadurch gekennzeichnet, daß die Antenne (3) eine interne Antenne, eine richtungsfreie Antenne die am Gehäuse oder Schaltkasten der Einheit (11) angeschlossen ist, oder auch wahlweise eine externe Antenne, die auf jeden Fall entsprechend an den Sender-Empfänger (1) angeschlossen ist.

## Revendications

1. Equipement fixe pour coupler un ou plusieurs appareils téléphoniques conventionnels à un réseau cellulaire, l'équipement pour la connexion à n'importe quel équipement téléphonique analogue standard étant disposé avec un interface à une ligne téléphonique ordinaire à deux fils, cet équipement comprenant une unité de transcepteur (1) qui comprend une unité électronique adaptée pour établir un contact avec le système de radiotéléphone cellulaire à travers une antenne (3), le transcepteur ayant un interface vocal (10) connecté à ce dernier, et qui comprend une carte électronique capable de saluer et d'entrer en communication avec le transcepteur (1), en utilisant un protocole compatible avec le transcepteur, afin de fournir une ligne téléphonique avec le même courant de boucle, des tonalités de demande de numérotation, un courant d'appel et d'autres caractéristiques semblables à celles de la ligne téléphonique normale, cet équipement comprenant en outre des moyens de génération d'énergie qui incorporent une batterie (7) et un circuit de charge afin de supplémenter une source d'alimentation (6) qui est connectée au réseau (8) et qui peut engendrer un courant continu à la tension requise afin d'activer les différentes éléments qui composent l'équipement, caractérisé par le fait que le transcepteur (1) soit adapté pour se mettre en contact avec un combiné (2) et par le fait que cet équipement comporte un interface de classification (4) qui comprend une carte électronique qui intervient pour recevoir des signaux par la ligne téléphonique disposée par l'interface vocal (10), y compris des signaux de classification logiques reçus du réseau de radiotéléphones cellulaires, et traiter ensuite ces signaux logiques afin d'engendrer les impulsions de classification nécessaires pour leur charge dans des téléphones publics, cet interface de classification (4) étant connecté aux différents téléphones ou à d'autres appareils (15).

2. Equipement de couplage d'un ou plusieurs appareils téléphoniques conventionnels à un réseau cellulaire, selon la 1ère revendication, caractérisé par le fait que l'unité de transception (1) soit pourvue d'une boîte de connexions (9), inaccessibles pour l'usager, à travers laquelle est connecté à cette unité le combiné (2) en essais de service par la compagnie.

3. Equipement de couplage d'un ou plusieurs appareils téléphoniques conventionnels à un réseau cellulaire, selon les revendications précédentes, caractérisé par le fait que l'antenne (3) peut être intérieure, omnidirectionnelle couplée au meuble ou à la caisse (11) de l'équipement, ou optionnellement extérieur à ce dernier, correctement connectée en tous cas à l'unité de transception (1).

ESTACIONES
DE BASE

CONMUTADORES
CELULARES

RTC

FIG.-1

FIG.-2

9

1 - 4 -10

6

7

11

12

FIG.- 3

3

FIG.- 4

14

13

15

8

FIG.-5

EP 0 569 314 B1